# EUROPEAN PATENT APPLICATION

(11) **EP 2 189 794 A1**
(43) Date of publication of application: **26.05.2010**
(21) Application number: 08828429.4
(22) Date of filing: 27.08.2008
(51) Int. Cl.: G01N 35/02, G01N 35/08, G01N 37/00

(54) **METHOD FOR FORMING OPTICAL READOUT CODE AND ANALYZING TOOL**

(30) Priority: 31.08.2007 JP 2007227211
(71) Applicant: ARKRAY, Inc., Kyoto-shi, Kyoto 601-8045 (JP)
(72) Inventor: KITAMURA, Shigeru, Kyoto-shi Kyoto 601-8045 (JP)
(74) Representative: Worthington, Richard Easton
(86) International application number: PCT/JP2008/065343
(87) International publication number: WO 2009/028577

(57) **Abstract**

The present invention relates to a method of forming a desired optical reading code by pattern formation of a plurality of pits 36. The plurality of the pits 36 are formed by irradiating a target surface for code formation 3A with a laser. The target surface for code formation 3A is, for example, a surface 3A of an analytical tool 1. The target surface for code formation 3A is one having translucency that can allow a visible light to pass therethrough. The laser has a peak wavelength in the infrared region. The optical reading code is for identification of information regarding the characteristics of the analytical tool 1.

## Description

### Technical Field

The present invention relates to a method of forming a desired optical reading code by pattern formation of a plurality of pits and an analytical tool having the optical reading code.

### Background Art

An analytical tool is employed to analyze a specific component in a test sample. This analytical tool may be provided, by an optical reading code such as the surface pits and projections or a bar code, with information necessary for inspection, such as the lot number, item(s) to be inspected and the like.

An example thereof is a discoid analytical tool in which a format as the optical reading code is formed on/in at least either surface of the top or the backside as pits and projections corresponding to such information (see, for example, Patent Document 1). Such format is formed, for example, during the injection molding of a disk. More particularly, by carrying out resin molding using a mold onto which pits and projections corresponding to the information have been previously formed, a format can be made simultaneously with molding of a disk.

However, in such a method in which pits and projections are formed at the time of resin molding, since the shape of the mold is fixed, an analytical tool can be provided only with such information elected prior to the production of the analytical tool. Therefore, the analytical tool cannot be provided with information grasped after the production of the analytical tool, for example, information regarding the sensitivity of the analytical tool, lot number, production date or expiration date.

Further, for the information regarding the characteristics which are predetermined prior to the production of the analytical tool, for example, information regarding the item(s) to be inspected, in cases where a change has to be made in such information, a new mold has to be produced. Therefore, it is required to change the mold every time a change is made in the information to be provided for the analytical tool, resulting in a disadvantage from the standpoint of the cost. Furthermore, since the production of a mold takes time, it is difficult to promptly respond to a change in the information to be provided for the analytical tool.

Patent Document 1: Japanese Unexamined Patent Application Publication No. H3-225278

### Disclosure of the Invention

### Problems to be solved by the Invention

The objects of the present invention are: to enable a target object to be provided even with information grasped after the production of the target object such as an analytical tool; to attain an advantage in cost; and to facilitate a response even when a change is made in the information to be provided for the target object.

### Means for Solving the Problems

According to the first aspect of the present invention, a method of forming an optical reading code, by which a desired optical reading code is formed by pattern formation of a plurality of pits, which plurality of pits are formed by irradiating a target surface for code formation with a laser, is provided.

The target surface for code formation has, for example, one having translucency that may allow a visible light to pass therethrough, and the laser is, for example, one having a peak wavelength in the infrared region. In this case, the target surface for code formation formed by an acrylic resin such as polymethyl methacrylate (PMMA), polydimethylsiloxane (PDMS), or polystyrene (PS).

The aforementioned pits are configured into a spot shape or a form of a series of a plurality of spots connected to each other.

The target surface for code formation is, for example, a surface of an analytical tool.

The analytical tool is, for example, one having a substrate and a cover laminated on the substrate. In this case, a plurality of pits are formed after the formation of one or more passages on/in at least either of the substrate or the cover.

Provided according to the second aspect of the present invention is an analytical tool including a substrate onto which a cover is laminated and an optical reading code, which optical reading code is formed by pattern formation of a plurality of pits and each of the pits is formed on either the aforementioned substrate or the aforementioned cover.

Each of the pits has, for example, a greater surface roughness at the bottom surface than in the periphery.

The plurality of pits are configured into, for example, a spot shape or a form of a series of a plurality of spots connected to each other.

The pits are formed, for example, in an edge of the analytical tool.

The analytical tools according to the first and second aspects of the present invention comprise a plurality of passages that extend radially from a center toward the edge. In this case, the optical reading code may comprise a plurality of individual codes that are made to correspond to respective passages.

The optical reading code is used for identification of information, for example, information regarding the characteristics of the analytical tool.

In the analytical tool according to the second aspect of the present invention, the plurality of the pits are formed, for example, by irradiation with a laser.

### Brief Explanation of the Drawings

[Fig. 1] Fig. 1 is a perspective view illustrating the entire microdevice which is an example of the analytical tool according to the present invention.
[Fig. 2] Fig. 2 is a plan view illustrating the substrate of the microdevice illustrated in Fig. 1.
[Fig. 3] Fig. 3 is a magnified plan view illustrating the principal parts of the substrate illustrated in Fig. 2.
[Fig. 4] Fig. 4A is a cross-sectional view of the analytical tool, illustrating the cross section along the line IVa-IVa of Fig. 3. Fig. 4B is a cross-sectional view of the analytical tool, illustrating the cross section along the line IVb-IVb of Fig. 3.
[Fig. 5] Fig. 5A and Fig. 5B are schematic views illustrating the movement condition of test sample in the microdevice illustrated in Fig. 1.
[Fig. 6] Fig. 6 is a plan view illustrating the principal parts of the cover of the microdevice illustrated in Fig. 1.
[Fig. 7] Fig. 7 is a cross-sectional view along the line IIV-IIV of Fig. 6.
[Fig. 8] Fig. 8 is a perspective view illustrating the principal parts to illustrate the method of forming the optical reading code on the microdevice illustrated in Fig. 1.
[Fig. 9] Fig. 9 is a cross-sectional view illustrating the principal parts to illustrate the method of forming the optical reading code on the microdevice illustrated in Fig. 1.

### Description of Symbols

- 1: Microdevice (analytical tool)
- 21: Passage
- 3A: Surface (of the cover) (target surface for code formation)
- 33: Optical reading code
- 36: Pit
- 36A: Bottom surface (of the pit)

### Best Mode for Carrying Out the Invention

The microdevice which corresponds to an example of the analytical tool according to the invention, as well as the method of forming an optical reading code will now be explained in the following with reference to the figures.

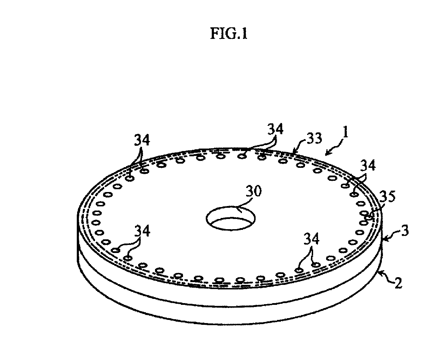

A microdevice 1 illustrated in Fig. 1 is employed in the analysis of a test sample by an optical method and mounted on an analyzer (not illustrated) for use. This microdevice 1 is configured as disposable and has a substrate 2 and a cover 3.

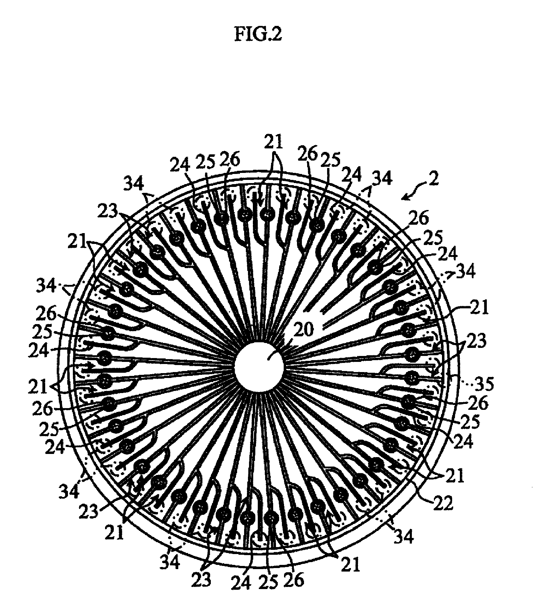

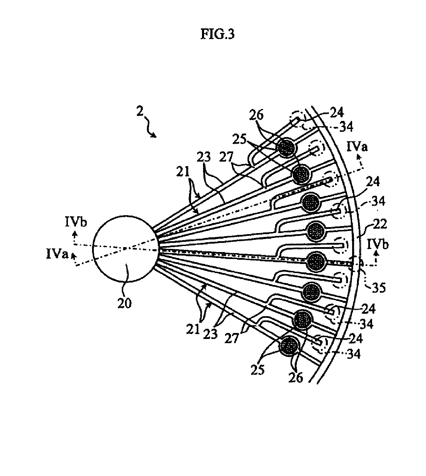

As illustrated in Fig 2 to Fig 4, the substrate 2 is formed into a shape of a disk as a whole and has a liquid receiver 20, a plurality of passages 21 and a common passage 22.

The liquid receiver 20 is for retaining the test sample to be introduced to each of the passages 21 and is formed as a cylindrical pit in the center of the substrate 2.

The plurality of passages 21 are used to transfer the test sample by capillary attraction and are provided in a radial pattern as a whole. Each of the passages 21 has a main passage 23 and a branched passage 24.

The main passage 23 has a reaction cell 25 and is connected to the common passage 22. The main passage 23 is configured such that the capillary attraction is effected when a gas in the common passage 22 is discharged to the outside. The reaction cell 25 provides a place for allowing the test sample to react with reagent, while it also serves as a part functioning as a photometric area. A reagent layer 26 is provided in the reaction cell 25.

The reagent layer 26 is configured suitably for analyzing, for example, alkaline phosphatase (ALP), glucose (Glu), lactate dehydrogenase (LDH), albumin (Alb), total bilirubin (T-Bil), inorganic phosphate (IP), uric acid (UA), blood urea nitrogen (BUN), glutamic oxaloacetic transaminase (GOT), glutamic-pyruvate transaminase (GPT), creatine phosphokinase (CPK), amylase (Amy), γ-glutamyltranspeptidase (GGT), creatinine (Cre), total protein (TP), calcium (Ca), magnesium (Mg), fructosamine (FRA), total cholesterol (T-Cho), high-density lipoprotein cholesterol (HDL-Cho) or triglyceride (TG). The reagent layer 26 is formed in the solid state which dissolves upon contacting with the test sample. Depending on the types of specific components to be analyzed, the reagent layer 26 further comprises, for example, a coloring agent, electron transfer substance, redox enzyme, surfactant or antiseptic agent.

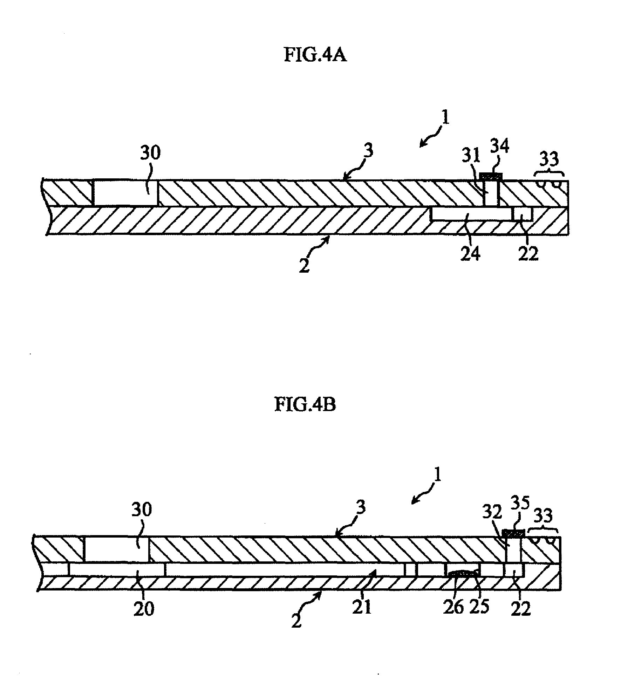

The branched passage 24 is for attaining the condition in which the test sample is provided to just in front of the reaction cell 25, branching from the main passage 21 at a branching part 27 which is positioned in the slightly upstream side of the reaction cell 25. This branched passage 24 is, as illustrated in Fig. 4A, communicated to a gas outlet 31 for the branched passage in the cover 3 described below.

As illustrated in Fig. 2, the common passage 22 is used when a gas inside the main passage 23 is discharged, and is formed circularly on the circumference of the substrate 2. This common passage 22 is, as illustrated in Fig. 4B, communicated to the main passage 23 and a gas outlet 32 for the common passage of the cover 3 described below.

The substrate 2 is formed by resin molding using, for example, acrylic resin such as polymethyl methacrylate (PMMA), polydimethylsiloxane (PDMS), or transparent resin material such as polystyrene (PS). In the resin molding, the liquid receiver 20, the plurality of passages 21 and the common passage 22 are simultaneously formed by elaborating the shape of the mold.

As illustrated in Fig. 1 and Fig. 4, the cover 3 is formed into a form of a transparent disk as a whole and comprises a test sample inlet 30, a plurality of the gas outlets 31 for the branched passage, the gas outlet 32 for the common passage and an optical reading code 33.

The test sample inlet 30 is used to introduce the test sample, and is formed as a penetrating hole. The test sample inlet 30 is formed in the center of the cover 3 in such a manner that the test sample inlet 30 is positioned directly above the liquid receiver 20 of the substrate 2.

Each of the gas outlets 31 for the branched passage is formed as a penetrating hole which is communicated to the corresponding branched passage 24. The upper opening of each gas outlet 32 for the common passage is sealed by a sealing material 34.

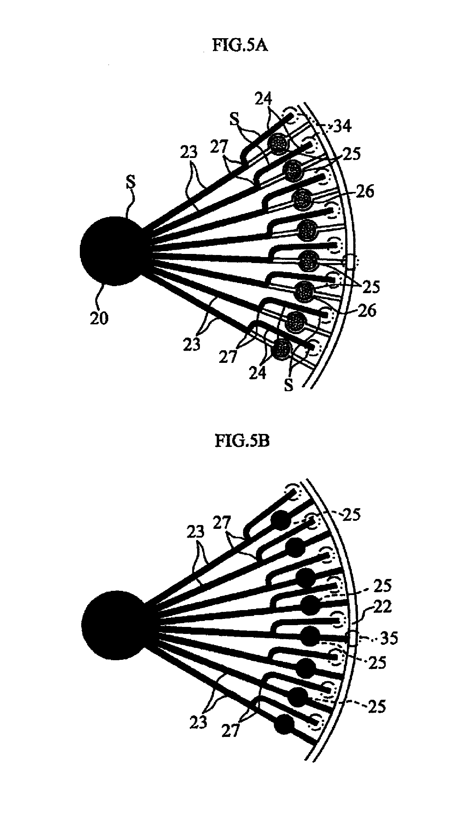

As illustrated in Fig. 5A, when an opening is formed on the sealing material 34 under the condition in which a test sample S is retained in the liquid receiver 20, the upstream side of the branching part 27 in the main passage 23 and the branched passage 24 become communicated to the outside, thereby effecting the capillary attraction in these parts. As a result, the test sample S in the liquid receiver 20 is transferred through the upstream side of the main passage 23 and introduced into the branched passage 24. Consequently, the test sample S becomes positioned immediately adjacent to the reaction cell 25.

As illustrated in Fig. 1 and Fig. 4, the gas outlet 32 for the common passage is used when the gas in the main passage 23 is discharged, and formed as a penetrating hole. The gas outlet 32 for the common passage is configured in such a manner that it is positioned directly above a prescribed position of the common passage 21 of the substrate 2, and the upper opening thereof is sealed by a sealing material 35.

As illustrated in Fig. 5B, when an opening is formed on the sealing material 35, the downstream side of the branching part 27 in the main passage 23 becomes communicated to the outside, thereby effecting the capillary attraction in this part. As a result, the test sample S which has been transferred immediately adjacent to the reaction cell 25 is introduced to the reaction cell 25. Consequently, in the reaction cell 25, the reagent layer 26 is dissolved with the test sample S, allowing a desired component to react with reagent. The thus obtained reaction product between the desired component in the test sample S and the reagent is detected by a known photometric mechanism and the desired component is analyzed based on the result of the detection.

The cover 3 is formed by resin molding using, for example, acrylic resin such as polymethyl methacrylate (PMMA), polydimethylsiloxane (PDMS), or transparent resin material such as polystyrene (PS). In this resin molding, the test sample inlet 30, the plurality of gas outlet 31s for the branched passage and the gas outlet 32 for the common passage are simultaneously formed by elaborating the shape of the mold.

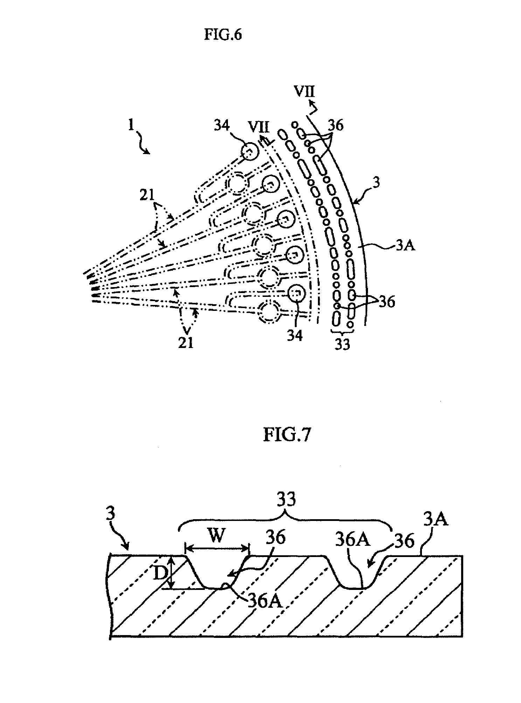

The optical reading code 33 illustrated in Fig. 6 and Fig. 7 is used for identification of information regarding the characteristics of the microdevice 1. Examples of information regarding the characteristics of the microdevice 1 include the item(s) to be inspected, inspection time (reaction time), passage number, expiration date, production date, place of production, lot number, and characteristics after a sampling inspection (for example, sensitivity).

The optical reading code 33 is formed as a plurality of pit 36s in an edge of the cover 3. In cases where a separate information, for example, information regarding the passage No. or item(s) to be inspected and inspection time, is required for each of the passages 21, the optical reading code 33 is formed such that it include individual code for each of the passage 21s. The plurality of pits 36 are each configured in a round shape (spot shape) or in an oval shape (a form of a series of a plurality of spots connected to each other) when viewed from the top and arranged in a double circles as a whole. By forming the plurality of pits 36 (optical reading code 33) in the periphery of the cover 3 in this manner, the dead space in the cover 3 can be effectively utilized, thereby restraining an enlargement of the microdevice 1.

Needless to say, the plurality of the pit 36s may be arranged in a single circle or triple or more circles. Alternatively, the plurality of the pits 36 may be arranged in a non-circular fashion, for example, in a linear or matrix fashion.

As illustrated in Fig. 7, the pit 36 is formed, for example, in a width (W) of 100 to 10,000µm and a depth (D) of 100 to 2,000µm. Further, the arithmetic average roughness (Ra) at least at a bottom surface 36A of the pit 36 is set at, for example, 0.05 to 100 µm. The bottom surface 36A having such a surface roughness is rougher than a surface 34 which is formed by an ordinary resin molding. Consequently, in cases where the optical reading code 33 (pit 36) is read by photoirradiation, since the reflection conditions are different between the pit 36 (bottom surface 36A) and a surface 3A of the cover 3, the pit 36 can be appropriately recognized, thereby suppressing the occurrence of misreading of the optical reading code 33.

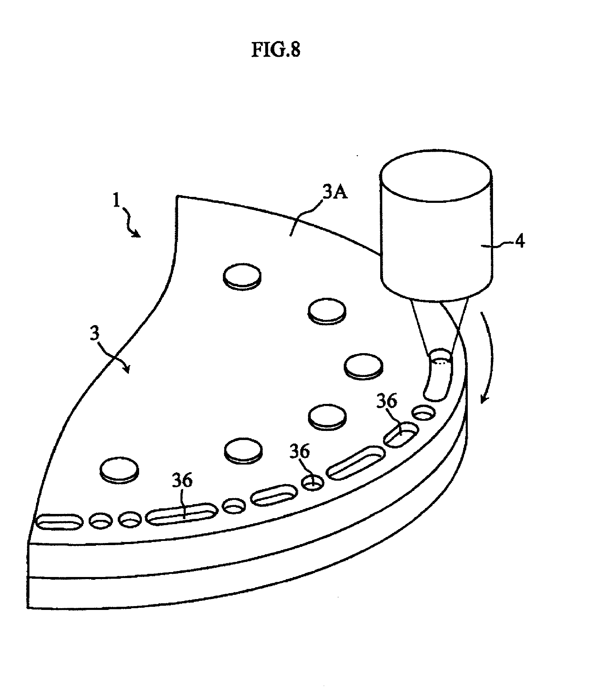

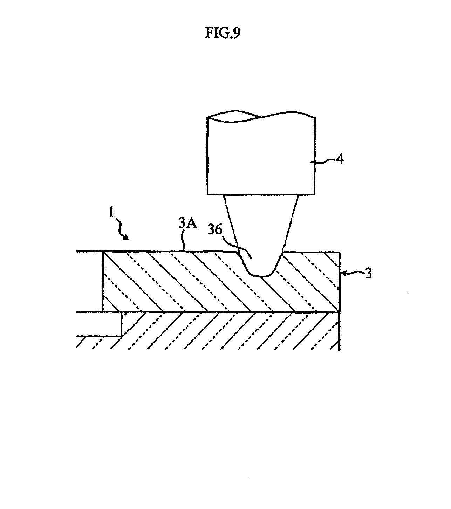

The optical reading code 33 comprising a plurality of such pits 36 may be formed by a laser processing as illustrated in Fig. 8 and Fig. 9. More particularly, the plurality of the pits 36 are configured in a circular fashion, under the condition in which a laser emitting unit 4 is aligned to the periphery of the cover 3 of the microdevice 1, by controlling the condition of the outgoing laser while rotating the microdevice 1 in the circumferential direction. The plurality of the pits 36 are configured into a spot shape or a form of a series of a plurality of spots connected to each other. Further, after moving the laser emitting unit 4 inward in the radial direction, by irradiating the microdevice 1 with a laser while rotating the microdevice 1, another row of circularly positioned plurality of the pit 36s are formed, thereby making the optical reading code 33 illustrated in Fig. 6.

As the laser emitting unit 4, one capable of emitting a wavelength of light which is photo-absorbed by the cover 3, for example, in cases where the cover 3 is made of a transparent resin such as acrylic resin, one capable of emitting an infrared light (for example, a wavelength of 1 to 10.6µm), such as a CO₂ laser, is used. Further, in cases where the optical reading code 33 is formed as the pit 36 having a width (W) of 100 to 1,000µm, a depth (D) of 100 to 2,000µm and a roughness (Ra) of 0.05 to 100µm, by irradiating an infrared light to a transparent resin such as acrylic resin, for example, the laser power is set at 5 to 100W and the spot diameter is set at 100 to 10,000µm.

In such a method of forming the optical reading code 33 as the pit 36 by irradiation of a laser in the above-described manner, the optical reading code 33 may be formed even after the formation of the microdevice 1. That is, such method allows the microdevice 1 to be appropriately provided with information elected after the production of the microdevice 1 as well, for example, information regarding the sensitivity of the analytical tool, lot number, production date or expiration date. Furthermore, the microdevice 1 may be provided with information elected prior to the production of the microdevice 1, for example, information regarding the item(s) to be inspected, after the production of microdevice 1. Consequently, even when a change has to be made in the information elected prior to the production of the microdevice 1 regarding the characteristics, a respond to the change may be made only by changing the pattern of outgoing laser from the laser source 4. Hence, there is no need to produce a new mold again and to dispose of the mold used before such change as in the cases where a pit is formed as an optical reading code by resin molding. Therefore, not only a reduction in waste and an advantage in the cost may be achieved, but also a prompt response to such a change in information can be facilitated.

Needless to say, the present invention is not restricted to the above-described embodiments and various modifications can be made thereto. For instance, the analytical tool according to the present invention is not restricted to a microdevice equipped with a plurality of passages in a radial fashion and may be an analytical tool of any other form.

Moreover, the formation of the optical reading code is not restricted to the cover and may be on the backside of the substrate.

Furthermore, the method of forming an optical reading code according to the present invention is not restricted for analytical tools such as a microdevice and can also be applied to other objects.

## Claims

1. A method of forming an optical reading code, comprising:
performing pattern formation of a plurality of pits by irradiating a target surface for code formation with a laser in order to form a desired optical reading code.

2. The method of forming an optical reading code according to claim 1, wherein the target surface for code formation has translucency that may allow a visible light to pass therethrough and the laser has a peak wavelength in the infrared region.

3. The method of forming an optical reading code according to claim 1, wherein the pits are formed into a spot shape.

4. The method of forming an optical reading code according to claim 1, wherein the pits are configured into a form of a series of a plurality of spots connected to each other.

5. The method of forming an optical reading code according to claim 1, wherein the target surface for code formation is a surface of an analytical tool.

6. The method of forming an optical reading code according to claim 5, wherein the analytical tool comprises a substrate and a cover laminated on the substrate, and the plurality of pits are formed after formation of one or more passages on/in at least either of the substrate or the cover.

7. The method of forming an optical reading code according to claim 6, wherein the analytical tool is in the form of a disk and the plurality of pits are formed along an edge of the analytical tool.

8. The method of forming an optical reading code according to claim 7, wherein a plurality of passages extend radially from a center toward the edge, and the optical reading code comprises a plurality of individual codes that are made to correspond to the respective passages.

9. The method of forming an optical reading code according to claim 6, wherein the optical reading code is for identification of information regarding characteristics of the analytical tool.

10. An analytical tool, comprising:
a substrate on which a cover is laminated; and
an optical reading code, the optical reading code being formed by pattern formation of a plurality of pits.

11. The analytical tool according to claim 10, wherein a surface roughness at a bottom surface of each of the plurality of pits is greater than that in a periphery of the pits.

12. The analytical tool according to claim 11, wherein the plurality of pits includes a pit having a spot shape.

13. The analytical tool according to claim 11, wherein the plurality of pits includes a pit having a form of a series of a plurality of spots connected to each other.

14. The analytical tool according to claim 11, which is in the form of a disk, the plurality of pits being formed in an edge of the analytical tool.

15. The analytical tool according to claim 14, comprising a plurality of passages extending radially from a center toward the edge, wherein the optical reading code comprises a plurality of individual codes that are made to correspond to the respective passages.

16. The analytical tool according to claim 14, wherein the optical reading code is for identification of information regarding characteristics of the analytical tool.

17. The analytical tool according to claim 10, wherein the plurality of pits are formed by irradiation with a laser.
